# EUROPÄISCHE PATENTSCHRIFT

(11) **EP 1 012 007 B1**
(45) Veröffentlichungstag und Bekanntmachung des Hinweises auf die Patenterteilung: **13.02.2002**
(21) Anmeldenummer: 98951175.3
(22) Anmeldetag: 20.08.1998
(51) Int. Cl.: B60R 21/32

(54) **EINRICHTUNG FÜR DEN INSASSENSCHUTZ IN EINEM KRAFTFAHRZEUG UND VERFAHREN ZUM STEUERN DES AUFBLASENS EINES GASSACKS IN EINEM KRAFTFAHRZEUG**
DEVICE FOR PROTECTING OCCUPANTS IN AN AUTOMOBILE AND A METHOD FOR CONTROLLING THE INFLATION OF A BAG IN AN AUTOMOBILE
DISPOSITIF POUR LA PROTECTION DES OCCUPANTS DANS UN VEHICULE AUTOMOBILE ET PROCEDE POUR COMMANDER LE GONFLAGE D'UN COUSSIN GONFLABLE DANS UN VEHICULE AUTOMOBILE

(30) Priorität: 09.09.1997 DE 19739497
(43) Veröffentlichungstag der Anmeldung: 28.06.2000
(73) Patentinhaber: SIEMENS AKTIENGESELLSCHAFT, 80333 München (DE)
(72) Erfinder: POPP, Peter, D-93049 Regensburg (DE); KIPPELT, Ulrich, D-63755 Alzenau (DE)
(86) Internationale Anmeldenummer: DE9802430
(87) Internationale Veröffentlichungsnummer: WO9912778

(56) Entgegenhaltungen:
- EP-A- 0 798 176
- DE-A- 19 610 833
- US-A- 5 400 487
- US-A- 5 454 591

## Beschreibung

Die Erfindung betrifft eine Einrichtung für den Insassenschutz in einem Kraftfahrzeug und ein Verfahren zum Steuern des Aufblasens eines Gassacks in einem Kraftfahrzeug, wie sie, dem Oberbegriff des Auspruchs 1 beziehungsweise 8 entsprechend, aus der US 5 454 591 A bekannt ist.

Die Anforderungen an Einrichtungen für den Insassenschutz in einem Kraftfahrzeug gehen heutzutage weit über das einfache Aufblasen eines Airbags bei einem erkannten Aufprall hinaus: Ein Insasse kann gegebenenfalls durch einen mit voller Wucht aufgeblasenen Airbag verletzt werden, sofern er sich mit seinem gesamten Körper oder einzelnen Körperteilen bereits vor oder zu Beginn des Aufblasens in einem Bereich befindet, der einige Millisekunden später durch das Volumen des vollständig aufgeblasenen Airbags in Anspruch genommen wird. Aus diesem Grunde ist es erstrebenswert, die Position des Insassen festzustellen und ein Auslösen des Airbags entweder zu verhindern oder einen mehrstufig aufblasbaren Airbag lediglich schwach zu füllen, sofern erkannt wird, daß der Insasse weit vorverlagert ist.

Eine Einrichtung zum Erkennen der Position eines Insassen oder eines Objektes auf einem Fahrzeugsitz ist durch die US 5,413,378 bekannt. Die Position des Insassen wird durch drei Ultraschallsensoren ermittelt, die im Armaturenbrett, in der Rückenlehne des Fahrzeugsitzes und seitlich des Fahrzeugsitzes angeordnet sind und den Raum zwischen Fahrzeugsitzlehne und Armaturenbrett nach einem Insassen oder einem Objekt abtasten. Ein Auswerter ermittelt aus den Sensorsignalen die Insassenposition.

Aufgrund der Abtastung des vorgeschriebenen Raumes muß jeder Ultraschallsensor eine Reichweite von etwa größer einem Meter aufweisen. Diese relativ große Reichweite bedingt jedoch ein relativ geringes Auflösungsvermögen, so daß Abstände nur in einem relativ groben Raster ermittelt werden können. Für ein dosiertes Aufblasen des Airbags ist jedoch eine feine Auflösung bei der Abstandsmessung erforderlich. Andererseits ist jedoch nicht notwendigerweise erforderlich, jede beliebige Insassenposition zu erfassen. Weiter ist das Anbringen eines Ultraschallsensors in der Rückenlehne des Fahrzeugsitzes aufwendig, da eine Durchtrittsöffnung durch den Lehnenbezug erforderlich ist. Eine derartige Anordnung des Sensors beeinträchtigt zudem den Sitzkomfort.

Aufgabe der Erfindung ist es deshalb, eine Einrichtung für den Insassenschutz in einem Kraftfahrzeug sowie ein Verfahren zum Steuern des Aufblasens eines Gassacks zu schaffen, die insbesondere bei einfacher und kostengünstiger Herstellung ein großes Auflösungsvermögen erreichen.

Der die Einrichtung betreffende Teil der Erfindungsaufgabe wird gelöst durch die Merkmale des Anspruchs 1. Der das Verfahren betreffende Teil der Erfindungsaufgabe wird gelöst durch die Merkmale des Anspruchs 8.

Dabei ist ein Sensor vorgesehen, der das Vorhandensein eines Objektes oder eines Insassen in einem Gefahrenbereich vor dem Gassack erkennt. Der Gassack entfaltet sich beim Aufblasen in den Raum zwischen Lenkrad oder Armaturenbrett und Insassen. Der Raum, den der Gassack nach seinem Aufblasen anfüllt stellt gleichzeitig für den Insassen zum Zeitpunkt des Aufblasens einen Gefahrenbereich dar. Ist zum Zeitpunkt des Aufblasens der Insasse mit einem Körperteil in diesem Gefahrenbereich, so ist die Gefahr einer Verletzung durch den sich aufblasenden Gassack erheblich. Mit dem insbesondere als Abstandssensor ausgebildeten Sensor wird also lediglich oder zumindest der Gefahrenbereich unmittelbar vor der Gassackvorrichtung erfaßt, also derjenige Bereich, in den sich der Gassack bei einem Aufprall entfalten wird. Aufgrund der relativ geringen Reichweite, die ein solcher Sensor zum Erfassen des Gefahrenbereichs aufweisen muß - insbeondere kleiner 40 cm, wenn der Sensor z.B. auf dem Armaturenbrett angeordnet ist-wird die Abtastgenauigkeit erhöht, insbesondere da der Algorithmus'zur Verarbeitung des ermittelten Abstands vereinfacht werden kann und deshalb mehr Rechenleistung für Abstandsermittlungen bei einer höheren Abtastrate zur Verfügung steht. Weiter ist ein Sensor für die abgerollte Gurtlänge - im folgenden kurz Gurtlänge - einer dem Fahrzeugsitz zugeordneten Gurtvorrichtung vorgesehen. Die abgerollte Gurtlänge und dabei insbesondere die zeitliche Gurtlängenänderung ist ein Maß für die Oberkörperposition des Insassen im Fahrzeugsitz. Ein Auswerter steuert abhängig von dem ermittelten Abstand und der ermittelten Gurtlänge das Aufblasen des Gassacks. Dabei trifft der Auswerter gewöhnlich in Abhängigkeit einer Aufprallerkennungseinrichtung - z.B. in Form eines Beschleunigungssensors - die Entscheidung, daß der Gassack aufgrund der Aufprallstärke zum Schutz des Insassen aufzublasen ist. Der Auswerter beeinflußt jedoch diese Entscheidung dahingehend, daß er in Abhängigkeit der abgerollten Gurtlänge und abhängig davon, ob ein Objekt oder ein Insasse im Gefahrenbereich erkannt wird, bestimmt, in welchem Maße der Gassack aufgeblasen wird, wobei auch ein Verhindern des Aufblasens möglich ist.

Vorteil der erfindungsgemäßen Einrichtung ist, daß die Insassenposition hochaufgelöst erkannt wird. Gerade durch den auflösungsempfindlichen, relativ schwach abstrahlenden Abstandssensor und die Ausbildung des weiteren Sensors zum Ermitteln des Abstandes zwischen dem Insassen und der Fahrzeugsitzlehne als Sensor für die abgerollte Gurtlänge wird eine aufwandsarm anzuordnende Einrichtung mit einer hohen Auflösung für die ermittelte Insassenposition geschaffen. Alleine mit diesen beiden Sensoren wird nicht nur ein normalsitzender, an die Rückenlehne gelehnter Insasse von einem in Richtung Armaturenbrett vorverlagerten Insassen unterschieden sondern auch von einem beispielsweise zeitungslesenden Insasse in normaler Sitzposition. Überdies sind keine mechanischen Eingriffe in den Fahrzeugsitz erforderlich. Ferner ist die Strahlungsbelastung für den Insassen stark herabgesetzt. Dennoch werden aber alle für die Insassenposition und insbesondere die Unterscheidbarkeit von unterschiedlichen Insassenpositionen notwendigen Informationen geliefert.

Vorteilhafte Weiterbildungen der Erfindung sind durch die Unteransprüche gekennzeichnet.

Ausführungsbeispiele der Erfindung und ihrer Weiterbildungen sind anhand der Zeichnung näher erläutert. Es zeigen:
- Figur 1: schematisch einen Innenraum eines Kraftfahrzeugs mit der erfindungsgemäßen Einrichtung, und
- Figur 2: ein Ablaufdiagramm für ein Auswerteverfahren im Auswerter der erfindungsgemäßen Einrichtung.

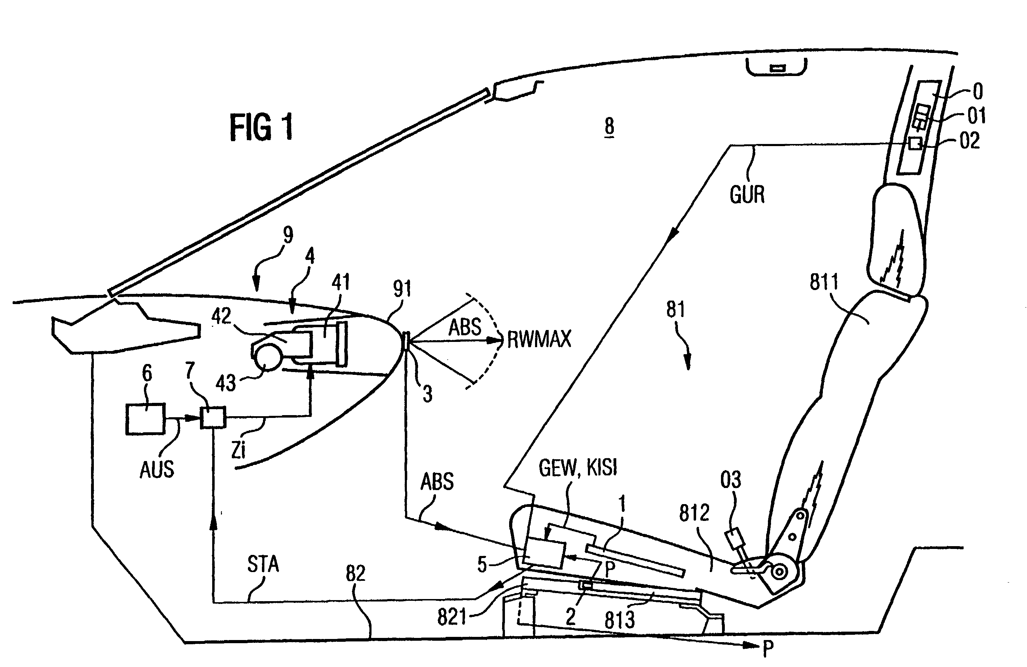

Figur 1 zeigt eine Fahrgastzelle 8, in der auf einer mit dem Fahrzeugboden 82 verbundenen Schiene 821 ein Fahrzeugsitz 81 mit einer Fahrzeugsitzlehne 811 und einem Fahrzeugsitzrumpf 812 über einer mit dem Fahrzeugsitzrumpf 812 verbundenen Sitzschiene 813 verschiebbar gelagert ist. An der B-Säule des Kraftfahrzeugs ist eine Gurtvorrichtung 0 mit einem auf eine Rolle aufgewickelten Gurtband 01 befestigt, das beim Gurtanlegen abgerollt wird. Ein nicht eingezeichnetes Verschlußteil des Gurtbandes 01 bildet zusammen mit einem Gurtschloß 03 eine Verriegelung bei angelegtem Sicherheitsgurt. Dabei ist ein Sensor 02 für die abgerollte Gurtlänge GUR vorgesehen.

Ein Aufnehmer 2 für die Position des Fahrzeugsitzes ist an der Sitzschiene 813 vorgesehen. Dieser Aufnehmer 2 ermittelt die Fahrzeugsitzposition P längs der eingezeichneten Achse. Der Fahrzeugsitz 81 enthält weiterhin eine Vorrichtung zur Gewichts- oder Kindersitzerkennung 1, die abhängig von einem auf dem Fahrzeugsitz 81 angeordneten Gewicht oder eines erkannten Kindersitzes die Statussignale GEW bzw KISI liefert.

In der Armaturenvorrichtung 9 ist hinter einer Gassackabdeckung 91 eine Gassackvorrichtung 4 enthaltend einen zusammengefalteten Gassack 41, einen Gasgenerator 42 sowie eine Halterung 43 angeordnet. Auf der Gassackabdeckung 91 ist ein Abstandssensor 3 angeordnet, der den strichiert eingezeichneten Gefahrenbereich vor dem Gassack 41 einstrahlig abtastet und ein Objekt oder einen Insassen in diesem Gefahrenbereich erkennt, wenn der aufgenommene Abstand ABS kleiner der maximalen Reichweite RWMAX ist.

Ein im Fahrzeugsitz 81 angeordneter Auswerter 5 wertet den Abstand ABS des Abstandsensors 3, die abgerollte Gurtlänge GUR des Sensors für die abgerollte Gurtlänge 02, die Statussignale GEW oder KISI der Vorrichtung zur Gewichts- oder Kindersitzerkennung 1 sowie die Fahrzeugsitzposition P des Aufnehmers für die Fahrzeugsitzposition 2 aus. Dabei wird insbesondere durch Differenzbildung einer zeitlich vorhergehend ermittelten abgerollten Gurtlänge und der aktuell ermittelten abgerollten Gurtlänge die Gurtlängenänderung innerhalb eines vorgegebenen Zeitraumes ermittelt. Anhand des Abstands ABS und der Gurt länge GUR bzw Gurtlängenänderung wird die Position eines Insassen oder eines Objektes erkannt.

Vorzugsweise wird von dem Auswerter 5 ein erstes Statussignal STA1 an eine Steuerschaltung 7 zum Auslösen des Gassacks 41 ausgegeben, wenn die Vorrichtung zur Gewichtserkennung 1 ein Gewichtssignal GEW liefert, das auf das Vorhandensein eines Insassen auf dem Fahrzeugsitz 81 schließen läßt - wobei das Gewichtssignal GEW insbesondere größer als ein vorgegebener Schwellwert ist -, gleichzeitig die abgerollte Gurtlänge GUR einen relativ niedrigen Grenzwert unterschreitet und gleichzeitig der Abstandssensor 3 kein Objekt oder keinen Insassen in seinem Wirkungsbereich erkennt. All diese Sensorsignale lassen auf das Vorhandensein eines Fahrzeuginsassen auf dem Fahrzeugsitz 81 in normaler, rückgelehnter Sitzposition schließen. Erkennt eine Aufprallerkennungseinrichtung 6 einen zum Auslösen des Gassacks 41 ausreichend starken Aufprall und liefert daher ein Auslösesignal AUS an die Steuerschaltung 7, so erzeugt die Steuerschaltung 7 ein Zündsignal Z, sofern gleichzeitig das erste Statussignal STA1 erkannt wird.

Liefert die Vorrichtung zur Gewichtserkennung 1 wiederum ein Gewichtssignal GEW, das auf das Vorhandensein eines Insassen rückschließen läßt, überschreitet die Gurtlänge GUR beziehungsweise die Gurtlängenänderung einen festgelegten Schwellwert und erkennt gleichzeitig der Abstandssensor 3 ein Objekt oder einen Insassen in seinem Wirkungsbereich, so wird ein zweites Statussignal STA2, daß sich vom ersten Statussignal STA1 unterscheidet, von dem Auswerter 5 an die Steuerschaltung 7 geliefert. Dieses zweite Statussignal STA2 kennzeichnet einen sehr weit nach vorne gelagerten Insassen, der sich zumindest mit einigen seiner Körperteile im Gefahrenbereich des Gassacks 41 aufhält. Liegt zusammen mit dem zweiten Statussignal STA2 das Auslösesignal AUS vor, so wird durch die Steuerschaltung 7 ein Erzeugen des Zündsignals Z verhindert, da bei einer derartigen Insassenposition das Verletzungsrisiko für den Insassen größer ist als der durch den Gassack erzielte Schutz. Ist der Gassack 41 mehrstufig auslösbar ausgebildet, kann also zum Beispiel der Gassack 41 durch Ansteuerung mehrerer dem Gassack 41 zugeordneter Gasgeneratoren 42 auf unterschiedliche Volumenstufen aufgeblasen werden, so kann alternativ lediglich eine erste Stufe des Gassacks 41 wird über einen zugeordneten Gasgenerator 42 mit einem Zündsignal Z₁, das sich von Zündsignalen Zᵢ für weitere Gasgeneratoren 42 unterscheidet, aufgeblasen werden. Das Füllvolumen des Gassacks 41 dann derart bemessen, daß bei dem erkannten Abstand ABS des Insassen vor der Gassackabdeckung 91 keine Gefahr für den Insassen durch das Aufblasen der ersten Stufe ausgeht.

Wird wiederum ein Insasse erkannt und ist gleichzeitig die Gurtlänge GUR beziehungsweise die Gurtlängenänderung gering und unterschreitet einen vorgegebenen Schwellwert, wird aber gleichzeitig ein Objekt im Wirkungsbereich des Abstandssensors 3 erkannt, so wird von dem Auswerter 5 ein drittes Statussignal STA3 an die Steuerschaltung 7 geliefert. Dieses dritte Steuersignal STA3 kennzeichnet insbesondere einen zeitungslesenden rückwärtsgelehnten Insassen. Die Steuerschaltung 7 löst bei vorliegendem dritten Statussignal STA3 und vorliegendem Auslösesignal AUS vorzugsweise eine mittlere Stufe eines mehrstufigen Gassacks aus, um dem Insassen einen Mindestschutz zu gewähren, andererseits aber der nicht ganz eindeutig vorherzubestimmenden Insassensituation und/oder - position in der Fahrgastzelle gerecht zu werden.

Vorzugsweise wird neben den Signalen des Abstandssensors 3 und des Sensors für die abgerollte Gurtlänge 02 die Fahrzeugsitzposition P des Aufnehmers für die Position des Fahrzeugsitzes 2 im Auswerter 5 für die Beurteilung der aktuellen Insassenposition mitberücksichtigt.
Ein weiteres Statussignal wird vorzugsweise dann von dem Auswerter 5 zur Steuerschaltung 7 geliefert, wenn die Vorrichtung zur Gewichts- und/oder Kindersitzerkennung 1 einen auf dem Fahrzeugsitz 81 angeordneten Kindersitz erkennt. Vorzugsweise wird dann die Gurtlänge GUR nicht berücksichtigt und lediglich der Abstand ABS überprüft: Erkennt der Abstandssensor 3 ein Objekt in seinem Wirkungskreis, so ist der Kindersitz rückwärts gerichtet, das heißt mit seiner Lehne der Armaturenvorrichtung 9 zugewandt. Bei einer solchen Objektposition wird ein Auslösen des Gassacks 41 durch die Steuerschaltung 7 aufgrund der für das Kind großen Verletzungsgefahr verhindert.

Die Erfindung erlaubt viele Weiterbildungen und Abwandlungen: Vorzugsweise ist der Abstandssensor 3 als Infrarotsensor ausgebildet. Er enthält dabei einen Infrarotsender, der Infrarotlicht mit einer maximalen Reichweite RWMAX gemäß Figur 1 ausstrahlt. Ein sich in dem durch die maximale Reichweite RWMAX bestimmten Wirkungsgebiet des Abstandsensors 3 aufhaltender Insasse oder Objekt reflektiert die Infrarotstrahlung, welche daraufhin mit Photodetektoren des Abstandssensors 3 aufgenommen wird. Der Auswerter 5 kann beispielsweise aufgrund der Laufdauer zwischen ausgesendetem und empfangenem Infrarotsignal auf den Abstand zwischen dem Sensor und dem erkannten Objekt Rückschlüsse gewinnen. Der Abstandssensor kann jedoch auch nach anderen physikalischen Prinzipien arbeiten, beispielsweise Ultraschall aussenden. Die Anordnung des Abstandssensors ist nicht auf die Gassackabdeckung 91 beziehungsweise die Armaturenvorrichtung 9 beschränkt. Der Abstandssensor 3 kann auch am Fahrzeughimmel angeordnet sein, wobei auch bei einer solchen Anordnung lediglich der sogenannte Gefahrenbereich vor dem Gassack erfaßt wird. Die maximale Reichweite RWMAX des Abstandssensors bezieht sich also auf die Ausdehnung des Gefahrenbereichs zwischen Gassackvorrichtung und einem potentiellen Objekt oder Insassen auf dem Fahrzeugsitz, nicht jedoch notwendigerweise auf die absolute Reichweite der Sensorstrahlung. Der Abstandssensor kann dabei insbesondere einstrahlig den wünschenswerten Abstand ermitteln oder mehrstrahlig ein Gebiet, zum Beispiel einen strichiert in Figur 1 eingezeichneten Sektor durch eine größere Anzahl von Strahlungsemittern und Strahlungsdetektoren abtasten.

Die Gurtvorrichtung 0 kann nicht nur an der B-Säule sondern auch am Fahrzeugsitz 81 selbst angeordnet sein. Für die Ermittlung der abgerollten Gurtlänge GUR bieten sich unterschiedliche physikalische Prinzipien zur Längenmessung an, insbesondere unter Zuhilfenahme optischer Meßmittel. Gleiches gilt für den Aufnehmer 2 für die Position des Fahrzeugsitzes. Die Gewichtserkennung 1 kann insbesondere mit Hilfe einer gewichtsabhängig ihren Widerstand ändernden Sensormatte im durchgeführt werden. Die Vorrichtung zur Kindersitzerkennung 1 sendet vorzugsweise ein elektromagnetisches Meßfeld aus, das durch Resonatoren in einem Kindersitz in charakteristischer Weise verändert wird.

Auswerter 5 und Steuerschaltung 7 können insbesondere durch einen gemeinsamen Mikroprozessor realisiert sein, der entweder im Fahrzeugsitz 81 oder am Fahrzeugtunnel oder im Armaturenbereich angeordnet ist. Auch die Aufprallerkennungseinrichtung 6 mit ihren Beschleunigungssensoren ist vorzugsweise in einem gemeinsamen Steuergerät zusammen mit der Steuerschaltung 7 und dem Auswerter 5 angeordnet.

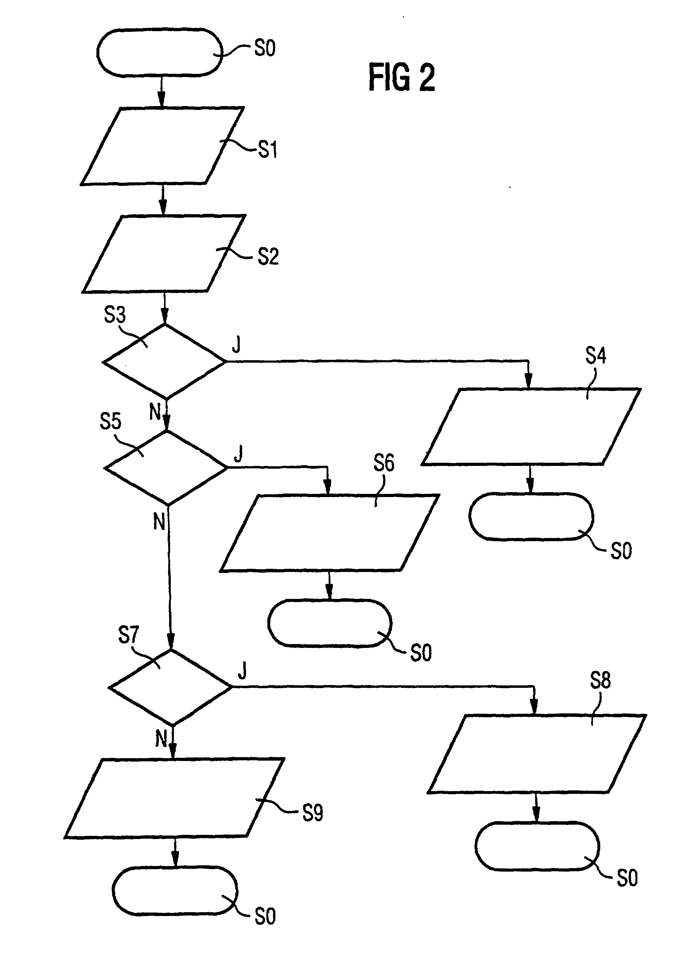

Figur 2 zeigt ein beispielhaftes im Auswerter 5 ablaufendes Verfahren zur Ermittlung der Statussignale STA. Nach Beginn in Schritt SO wird in Schritt S1 der von dem Sensor 3 für den Gefahrenbereich gelieferte und in einem Speicher des Auswerters 5 abgelegte Abstand ABS ausgelesen, in Schritt S1 die ebenfalls in dem Speicher abgelegte abgerollte Gurtlänge GUR. Ist gemäß einer Überprüfung in Schritt S3 die Gurtlänge GUR groß und wird ein Objekt oder Insasse im Gefahrenbereich erkannt, so wird in Schritt S4 das zweite Statussignal STA2 von dem Auswerter 5 abgegeben und daraufhin mit Schritt S0 ein neuer Zyklus gestartet. Die Person sitzt höchstwahrscheinlich nahe am Armaturenbrett, sodaß auf das Statussignal S2 hin ein Aufblasen des Gassacks verhindert wird. Wird die Abfrage in Schritt S3 jedoch verneint und wird in Schritt S5 festgestellt, daß die Gurtlänge GUR klein und kein Objekt oder Insasse im Gefahrenbereich erkannt wird, so wird das erste Statussignal STA1 durch den Auswerter 5 abgegeben - die Person sitzt also normal auf dem Fahrzeugsitz -, bevor mit Schritt S0 neue Werte eingelesen werden. Wird die Abfrage in Schritt S5 verneint und in Schritt S7 festgestellt, daß sowohl der Abstand zur Rückenlehne gering als auch ein Objekt oder Insasse im Gefahrenbereich erkannt wird, so wird mit Schritt S8 das Statussignal STA3 an die Steuerschaltung 7 geliefert - die Person sitzt normal, es ist jedoch etwas nahe am Armaturenbrett -, bevor mit Schritt S0 die Lesevorgänge neu begonnen werden. Wird die Abfrage im Schritt S7 verneint, so wird in Schritt S9 ein Statussignal STA4 an die Steuerschaltung übermittelt mit dem Inhalt 'Es liegt ein unbestimmter Zustand vor', bevor mit Schritt S0 fortgefahren wird.

## Patentansprüche

1. Einrichtung für den Insassenschutz in einem Kraftfahrzeug,
- mit einem Gassack (41) zum Schutz eines Insassen auf einem Fahrzeugsitz (81),
- mit einem Sensor (3), der das Vorhandensein eines Objektes oder eines Insassen in einem Gefahrenbereich erkennt, in den sich der Gassack (41) beim Aufblasen entfaltet,
- mit einem Sensor (02) für die abgerollte Gurtlänge (GUR) einer dem Fahrzeugsitz (81) zugeordneten Gurtvorrichtung (0),
- mit einem Auswerter (5), der abhängig von dem Erkennen eines Objektes oder eines Insassen im Gefahrenbereich und abhängig von der ermittelten Gurtlänge (GUR) ein Aufblasen des Gassacks (41) steuert,
- **dadurch gekennzeichnet, daß** der Auswerter (5) eine Gurtlängenänderung ermittelt, die abhängt von der aktuell gemessenen Gurtlänge und der zu einem früheren Zeitpunkt gemessenen Gurtlänge.

2. Einrichtung nach Anspruch 1, bei der der Sensor (3) zum Erkennen eines Objektes oder eines Insassen in dem Gefahrenbereich als Infrarotsensor ausgebildet ist.

3. Einrichtung nach Anspruch 1 oder Anspruch 2,
- mit einer Aufprallerkennungseinrichtung (6),
- mit einer Gewichtserkennung (1) für ein auf dem Fahrzeugsitz (81) angeordnetes Gewicht,
- bei der der Auswerter (5) ferner abhängig von einem erkannten Aufprall (a) und abhängig von dem erkannten Gewicht (GEW) ein Aufblasen der Gassacks (41) steuert.

4. Einrichtung nach einem der vorhergehenden Ansprüche,
- mit einer Vorrichtung (1) zum Erkennen eines auf dem Fahrzeugsitz angeordneten Kindersitzes,
- bei der der Auswerter (5) zusätzlich in Abhängigkeit eines von der Kindersitzerkennungsvorrichtung (1) gelieferten Statussignals (KISI) ein Aufblasen des Gassacks (41) steuert.

5. Einrichtung nach einem der vorhergehenden Ansprüche,
- bei der der Gassack (41) mehrstufig aufblasbar ist, und
- bei der das Steuern des Aufblasens der Gassacks (41) eine Auswahl der aufzublasenden Stufe mitumfaßt.

6. Einrichtung nach einem der vorhergehenden Ansprüche, bei der der Auswerter (5) ein aufprallbedingtes Aufblasen des Gassacks (41) unterdrückt oder ein aufprallbedingtes Aufblasen des Gassacks (41) nur auf eine erste Volumenstufe zuläßt, wenn ein Objekt oder ein Insasse im Gefahrenbereich erkannt wird und wenn die ermittelte Gurtlänge (GUR) oder die ermittelte Gurtlängenänderung einen Grenzwert überschreitet.

7. Einrichtung nach einem der vorhergehenden Ansprüche, bei der der Auswerter (5) ein aufprallbedingtes Aufblasen des Gassacks (41) zuläßt, wenn ein Objekt oder ein Insasse im Gefahrenbereich erkannt wird und wenn die ermittelte Gurtlänge (GUR) oder die ermittelte Gurtlängenänderung einen Grenzwert unterschreitet.

8. Verfahren zum Steuern des Aufblasens eines Gassacks in einem Kraftfahrzeug,
- bei dem durch einen Sensor (3) das Vorhandensein eines Objektes oder eines Insassen in einem Gefahrenbereich erkannt wird, in den sich der Gassack (41) beim Aufblasen entfaltet,
- bei dem durch einen Sensor (02) die abgerollte Gurtlänge (GUR) einer dem Fahrzeugsitz (81) zugeordneten Gurtvorrichtung (0) erkannt wird, und.
- bei dem durch einen Auswerter (5) abhängig von dem Erkennen eines Objektes oder eines Insassen im Gefahrenbereich und abhängig von der ermittelten Gurtlänge (GUR) ein Aufblasen des Gassacks (41) gesteuert wird,
**dadurch gekennzeichnet daß** durch den Auswerter (5) eine Gurtlängenänderung ermittelt wird, die abhängt von der aktuell gemessenen Gurtlänge und der zu einem früheren Zeitpunkt gemessenen Gurtlänge.

9. Verfahren nach Anspruch 8, bei dem ein aufprallbedingtes Aufblasen des Gassacks (41) unterdrückt wird oder ein aufprallbedingtes Aufblasen des Gassacks (41) nur auf eine erste Volumenstufe zugelassen wird, wenn ein Objekt oder ein Insasse im Gefahrenbereich erkannt wird und wenn die ermittelte Gurtlänge (GUR) oder die ermittelte Gurtlängenänderung einen Grenzwert überschreitet.

## Claims

1. Device for the protection of occupants in a vehicle,
- with an airbag (41) to protect an occupant on a vehicle seat (81),
- with a sensor (3) that detects the presence of an object or an occupant in a danger area, in which the airbag (41) deploys on inflation,
- with a sensor (02) for the unrolled belt length (GUR) of a belt device (0) assigned to the vehicle seat (81),
- with an evaluator (5), that controls the inflation of the airbag (41) depending on the detection of an object or occupant in the danger area and depending on the determined belt length (GUR),
**characterised in that**
- the evaluator (5) determines a change in the belt length, that depends on the currently measured belt length and the belt length measured at an earlier time point.

2. Device in accordance with Claim 1, whereby the sensor (3) for detecting an object or occupant in the danger area is designed as an infrared sensor.

3. Device in accordance with Claim 1 or Claim 2,
- with an impact detection device (6),
- with a weight detector (1) for a weight placed on the vehicle seat (81),
- whereby the evaluator (5) further controls the inflation of the airbag (41) depending on a detected impact (a) and depending on the detected weight (GEW).

4. Device in accordance with one of the preceding claims,
- with a device (1) for detecting a child seat placed on the vehicle seat.
- whereby the evaluator (5) controls the inflation of the airbag (41) additionally depending on a status signal (KISI) supplied from the child seat detection device (1).

5. Device in accordance with one of the preceding claims,
- whereby the airbag (41) can be inflated in stages and
- whereby the control of the inflation of the airbag (41) includes selecting the stage to be inflated.

6. Device in accordance with one of the preceding claims, whereby the evaluator (5) suppresses an inflation of the airbag (41) due to an impact or permits the inflation of the airbag (41) due to an impact only to a first volume stage, if an object or an occupant is detected in the danger area and if the determined belt length (GUR) or the determined belt length change exceeds a limit value.

7. Device in accordance with one of the preceding claims, whereby the evaluator (5) permits the inflation of the airbag (41) due to an impact, if an object or an occupant is detected in the danger area and if the determined belt length (GUR) or the determined belt length change is less than a limit value.

8. Method for controlling the inflation of an airbag in a vehicle,
- whereby the presence of an object or an occupant in a danger area, in which the airbag (41) deploys on inflation, is detected by a sensor (3),
- whereby the unrolled belt length (GUR) of a belt device (0) assigned to a vehicle seat (81) is detected by a sensor (02), and
- whereby by means of an evaluator (5), the inflation of the airbag (41) is controlled depending on the detection of an object or occupant in the danger area and depending on the determined belt length (GUR),
**characterised in that**
by means of the evaluator (5) a belt length change is determined, that depends on the currently measured belt length and the belt length measured at an earlier time point.

9. Method in accordance with Claim 8, whereby the inflation of the airbag (41) due to an impact is suppressed or the inflation of the airbag (41) due to an impact is permitted only to a first volume stage, if an object or occupant is detected in the danger area and if the determined belt length (GUR) or the determined belt length change exceeds a limit value.

## Revendications

1. Dispositif de protection d'occupant dans un véhicule automobile, comprenant
- un sac gonflable de protection (41) servant à protéger un occupant situé sur un siège de véhicule (81),
- un capteur (3), qui constate la présence d'un objet ou d'un occupant dans une zone de danger dans laquelle le sac gonflable de protection (41) se déplie lors du gonflage,
- un capteur (02) pour la longueur de ceinture déroulée (GUR) d'un dispositif de ceinture (0) associé au siège de véhicule (81),
- un élément d'analyse (5), qui, en fonction de la constatation de la présence d'un objet ou d'un occupant dans la zone de danger et en fonction de la longueur de ceinture relevée (GUR), peut commander un gonflage du sac gonflable de protection (41),
**caractérisé en ce que**
- l'élément d'analyse (5) relève une variation de longueur de ceinture qui dépend de la longueur de ceinture mesurée d'une manière actuelle et de la longueur de ceinture mesurée à un instant antérieur.

2. Dispositif suivant la revendication 1, dans lequel le capteur (3) servant à constater la présence d'un objet ou d'un occupant dans la zone de danger est réalisé sous forme d'un capteur infrarouge.

3. Dispositif suivant la revendication 1 ou la revendication 2, comprenant
- un dispositif de constatation de collision (6),
- une constatation de présence de poids (1) pour un poids disposé sur le siège de véhicule (81),
- dans lequel l'élément d'analyse (5) commande en outre un gonflage du sac gonflable de protection (41) en fonction d'une collision (a) constatée et en fonction du poids constaté (GEW).

4. Dispositif suivant l'une des revendications précédentes,
- comprenant un dispositif (1) servant à constater la présence d'un siège d'enfant disposé sur le siège de véhicule,
- dans lequel l'élément d'analyse (5) commande en outre un gonflage du sac gonflable de protection (41) en fonction d'un signal de statut (KISI) délivré par le dispositif de constatation de présence de siège d'enfant (1).

5. Dispositif suivant l'une des revendications précédentes,
- dans lequel le sac gonflable de protection (41) est gonflable en plusieurs paliers et
- dans lequel la commande du gonflage du sac gonflable de protection (41) comporte une sélection du palier devant être gonflé.

6. Dispositif suivant l'une des revendications précédentes, dans lequel l'élément d'analyse (5) interdit un gonflage du sac gonflable de protection (41) dû à une collision ou n'autorise un gonflage du sac gonflable de protection (41) dû à une collision qu'à un premier palier de volume si la présence d'un objet ou d'un occupant est constatée dans la zone de danger et si la longueur de ceinture relevée (GUR) ou la variation de longueur de ceinture relevée dépasse vers le haut une valeur limite.

7. Dispositif suivant l'une des revendications précédentes, dans lequel l'élément d'analyse (5) autorise un gonflage du sac gonflable de protection (41) dû à une collision si la présence d'un objet ou d'un occupant est constatée dans la zone de danger et si la longueur de ceinture relevée (GUR) ou la variation de longueur de ceinture relevée dépasse vers le bas une valeur limite.

8. Procédé de commande du gonflage d'un sac gonflable de protection dans un véhicule automobile, selon lequel
- au moyen d'un capteur (3), la présence d'un objet ou d'un occupant dans une zone de danger dans laquelle le sac gonflable de protection (41) se déplie lors du gonflage est constatée,
- au moyen d'un capteur (02), la longueur de ceinture déroulée (GUR) d'un dispositif de ceinture (0) associé au siège de véhicule (81) est constatée et
- au moyen d'un élément d'analyse (5), un gonflage du sac gonflable de protection (41) est commandé en fonction de la constatation de la présence d'un objet ou d'un occupant dans la zone de danger et en fonction de la longueur de ceinture (GUR) relevée,
**caractérisé en ce qu'**au moyen de l'élément d'analyse (5), une variation de longueur de ceinture, qui dépend de la longueur de ceinture mesurée d'une manière actuelle et de la longueur de ceinture mesurée à un instant antérieur, est relevée.

9. Procédé suivant la revendication 8, selon lequel un gonflage du sac gonflable de protection (41) dû à une collision est interdit ou un gonflage du sac gonflable de protection (41) dû à une collision n'est autorisé qu'à un premier palier de volume si la présence d'un objet ou d'un occupant est constatée dans la zone de danger et si la longueur de ceinture relevée (GUR) ou la variation de longueur de ceinture relevée dépasse vers le haut une valeur limite.
